# FASCICULE DE BREVET EUROPEEN

(11) **EP 1 797 695 B1**
(45) Date de publication et mention de la délivrance du brevet: **13.09.2017**
(21) Numéro de dépôt: 05797059.2
(22) Date de dépôt: 28.09.2005
(51) Int. Cl.: H04L 29/06

(54) **PROCÉDÉ DE MISE À JOUR D'UNE TABLE DE CORRESPONDANCE ENTRE UNE ADRESSE ET UN NUMÉRO D'IDENTIFICATION**
VERFAHREN ZUM AKTUALISIEREN EINER KORRESPONDENZTABELLE ZWISCHEN EINER LOGISCHEN ADRESSE UND EINER IDENTIFIKATIONSNUMMER
METHOD FOR UPDATING A TABLE OF CORRESPONDENCE BETWEEN A LOGICAL ADDRESS AND AN IDENTIFICATION NUMBER

(30) Priorité: 30.09.2004 EP 04104784
(43) Date de publication de la demande: 20.06.2007
(73) Titulaire: Nagravision SA, 1033 Cheseaux-sur-Lausanne (CH)
(72) Inventeur: STRANSKY, Philippe, CH-1033 Cheseaux-sur-Lausanne (CH)
(74) Mandataire: Leman Consulting S.A.
(86) Numéro de dépôt international: PCT/EP2005/054896
(87) Numéro de publication internationale: WO 2006/035054

(56) Documents cités:
- WO-A-2004/025926
- US-B1- 6 393 484

## Description

### DOMAINE DE L'INVENTION

La présente invention concerne un procédé de mise à jour d'une table de correspondance entre une adresse logique associée à une unité d'utilisateur dans un réseau de communication et un numéro unique d'identification associé à cette unité d'utilisateur d'un groupe d'unités d'utilisateur.

L'unité d'utilisateur permet en particulier l'accès à un contenu ou des données à accès conditionnel, ces données étant transmises par un réseau tel que par exemple Internet.

Dans le contexte de la présente invention, deux types d'envois sont utilisés simultanément. En effet, un contenu tel que par exemple des événements de télévision à péage, est envoyé en mode diffusion à plusieurs unités d'utilisateurs, généralement un grand nombre d'unités. Ce contenu est généralement chiffré de sorte qu'un utilisateur n'ayant pas les clés de déchiffrement requises n'est pas en mesure d'accéder au contenu chiffré. Ces clés sont envoyées selon un deuxième type d'envoi, dans des messages adressés de façon individuelle à chaque unité d'utilisateur, en passant par un réseau de moyens de communication dans lequel chaque utilisateur est référencé par une adresse logique.

### ART ANTERIEUR

De façon conventionnelle, une unité d'utilisateur comporte des moyens de traitement de données, qui peuvent être un ordinateur, un décodeur ou un autre élément similaire, et un module de sécurité en charge des opérations cryptographiques associées à l'accès ou au traitement des données. De façon bien connue, ce module de sécurité peut être réalisé essentiellement selon quatre formes distinctes. L'une d'elles est une carte à microprocesseur, une carte à puce, ou plus généralement un module électronique (ayant une forme de clé, de badge,...). Un tel module est généralement amovible et connectable au décodeur. La forme avec contacts électriques est la plus utilisée, mais n'exclut pas une liaison sans contact par exemple de type ISO 14443.

Une deuxième forme connue est celle d'un boîtier de circuit intégré placé, généralement de façon définitive et inamovible dans le boîtier du décodeur. Une variante est constituée d'un circuit monté sur un socle ou connecteur tel qu'un connecteur de module SIM.

Dans une troisième forme, le module de sécurité est intégré dans un boîtier de circuit intégré ayant également une autre fonction, par exemple dans un module de désembrouillage du décodeur ou le microprocesseur du décodeur.

Dans une quatrième forme de réalisation, le module de sécurité n'est pas réalisé sous forme matérielle, mais sa fonction est mise en oeuvre sous forme uniquement logicielle. Etant donné que dans les quatre cas, bien que le niveau de sécurité diffère, la fonction est identique, on parlera de module de sécurité quelle que soit la manière de réaliser sa fonction ou la forme que peut prendre ce module.

L'unité d'utilisateur comprend un numéro unique d'identification qui peut être stocké dans les moyens de traitement des données et/ou dans le module de sécurité.

De façon conventionnelle, plusieurs unités d'utilisateur forment un groupe qui est géré par un centre de gestion. Dans le cadre de la présente invention, les unités d'utilisateur et le centre de gestion peuvent communiquer entre eux par un réseau de communication qui peut être notamment un réseau global tel qu'Internet. Suivant la configuration du réseau, un centre de gestion peut avoir des difficultés pour initier une communication avec une unité d'utilisateur. Il est préférable que ce soit l'unité d'utilisateur qui initie la communication en envoyant une requête au centre de gestion. Cette requête peut passer par plusieurs dispositifs de routage avant d'atteindre le centre de gestion. Au moment où l'unité d'utilisateur débute la communication avec le centre de gestion, un canal de communication entre le centre de gestion et l'unité d'utilisateur est maintenu ouvert, de sorte que des communications peuvent également être transmises depuis le centre de gestion vers l'unité d'utilisateur.

Une adresse dynamique est attribuée à l'unité d'utilisateur pour permettre la communication avec le centre de gestion. Cette adresse dynamique est généralement différente lors de chaque session de communication.

Lorsqu'un message doit être renvoyé à l'unité multimédia qui a initié la communication et transmis la requête, le centre de gestion envoie son message en utilisant le canal ou adresse dynamique qui est maintenu ouvert pendant la session.

Le brevet N° US 5,278,829 décrit un procédé permettant à un centre de gestion d'envoyer des messages a une unité d'utilisateur. Plus précisément, ce brevet décrit un procédé de contrôle d'adresses physiques d'un hôte récepteur, généralement un ordinateur, à l'intérieur d'un réseau. Ce réseau est composé d'un hôte émetteur et de plusieurs hôtes récepteurs. Chaque hôte est identifié par une adresse physique. Ces adresses physiques sont mémorisées dans l'hôte émetteur et sont associées à une valeur temporelle telle que la date de leur dernière utilisation.

Lorsque l'émetteur doit envoyer un message à un récepteur, il cherche l'adresse physique de ce récepteur dans sa mémoire. S'il la trouve, il détermine si la date mémorisée est plus ancienne qu'une valeur de seuil. Si ce n'est pas le cas, il envoie le message au récepteur. Si la date est plus ancienne que la valeur de seuil, l'émetteur envoie un premier message au récepteur, en utilisant l'adresse physique mémorisée. Il attend ensuite une quittance de la part du récepteur. S'il reçoit cette quittance, il envoie le contenu au récepteur. Si au contraire, il ne reçoit pas de quittance, il diffuse un message à tous les récepteurs en leur demandant de quittancer ce message. S'il reçoit une quittance, il pourra alors mémoriser la nouvelle adresse physique du récepteur qui a renvoyé la quittance.

Le procédé décrit dans ce brevet ne fonctionne que dans les cas très particuliers dans lesquels un hôte récepteur ne change presque jamais d'adresse physique. En effet, comme un message est transmis à une adresse physique mémorisée dans l'hôte émetteur, si les adresses physiques sont modifiées à chaque enclenchement, les chances pour qu'un message arrivent à la bonne unité d'utilisateur sont pratiquement nulles.

De plus, comme les adresses physiques sont généralement réattribuées, il est possible que le centre de gestion envoie un message à une autre unité d'utilisateur que celle souhaitée quand bien même cette unité d'utilisateur renvoie une quittance au centre de gestion pour confirmer la bonne réception du message.

Dans les systèmes conventionnels dans lesquels les adresses physiques changent et sont réattribuées à chaque connexion, le procédé décrit dans le brevet US 5,278,829 ne fonctionne donc pas.

Cette procédure présente l'inconvénient que les messages envoyés sont très souvent inutiles et occupent de la bande passante qui pourrait être utilisées de façon plus judicieuse. De plus, la réception du message par une unité d'utilisateur non-souhaitée peut avoir des conséquences en terme de sécurité.

Une autre procédure consiste à démarrer une étape de réinitialisation lorsque l'unité d'utilisateur ne fonctionne plus. Cette procédure a pour objectif de transmettre le numéro d'identification unique au centre de gestion, par le biais du réseau de communication, en utilisant une adresse spécifique.

Dans ce cas, l'abonné doit patienter jusqu'à ce que la réinitialisation soit terminée. Ceci peut durer relativement longtemps, typiquement plusieurs minutes, pendant lesquelles le déchiffrement des données n'est pas possible.

Un autre problème des procédés de l'art antérieur est connu sous le terme de "Address spoofing" ou usurpation d'adresse. En utilisant ce procédé, une unité d'utilisateur peut modifier un identifiant lié à l'adresse de communication de telle sorte que le centre de gestion croit communiquer avec une unité d'utilisateur spécifique alors qu'il transmet en réalité des informations à une autre unité. Une méthode pour contrer de tel "Address spoofing" est divulguée dans la publication numéro WO 2004/025926A1.

### BUTS DE L'INVENTION

La présente invention se propose de pallier les inconvénients des procédés de l'art antérieur en réalisant un procédé qui permette une mise à jour automatique d'une table de correspondance entre des adresses logiques du réseau de communication et le numéro unique d'identification d'unités d'utilisateur. Cette mise à jour se fait de façon optimale du fait que la recherche des adresses n'est entreprise que pour les adresses ayant changé. De la bande passante n'est donc pas occupée inutilement. Elle a également pour but de transmettre un contenu ou des données à une unité d'utilisateur de façon rapide, sans perte de temps pour l'utilisateur. De plus, la mise à jour se fait sans que l'utilisateur perde momentanément l'accès au service.

La présente invention a également pour but de s'assurer que le centre de gestion communique réellement avec l'unité d'utilisateur enregistrée à l'adresse mémorisée. Ceci a deux fonctions. D'une part, cela sert à éviter qu'un message soit envoyé à une fausse adresse. D'autre part, cela sert à éviter qu'une unité d'utilisateur se fasse passer frauduleusement pour une autre unité d'utilisateur (adresse spoofing). Ces buts sont atteints par les revendications ci-jointes.

Selon le procédé de l'invention, le centre de gestion détecte automatiquement un changement d'adresse de communication associée à une unité d'utilisateur spécifique. Cette détection automatique est possible grâce à l'utilisation d'un message de retour ou d'une quittance. De façon plus détaillée, la quittance peut se faire de différentes manières. Selon une première manière, une requête est envoyée à une unité d'utilisateur par le centre de gestion, en utilisant l'adresse logique connue par le centre de gestion. Si un message est retourné au centre de gestion par l'unité d'utilisateur, l'adresse logique sera considérée comme correcte. Ce procédé très simple ne fonctionne que si les adresses logiques qui ne sont plus en service ne sont pas réattribuées à une autre unité d'utilisateur, ce qui est généralement le cas en pratique.

Selon une autre manière, lorsque le centre de gestion renvoie à une unité d'utilisateur, une réponse à une requête provenant de cette unité, la réponse contient le numéro unique d'identification de l'unité d'utilisateur à laquelle la réponse est destinée. L'unité d'utilisateur vérifie ensuite son propre numéro unique d'identification et renvoie un message de retour ou quittance au centre de gestion en lui indiquant si oui ou non, son numéro d'identification correspond à celui contenu dans la réponse.

Selon une troisième manière, le centre de gestion demande à l'unité d'utilisateur d'envoyer son numéro unique d'identification. Celui-ci est comparé au niveau du centre de gestion et non au niveau de l'unité d'utilisateur comme dans le cas précédent.

Selon une quatrième manière, une véritable authentification de l'unité d'utilisateur est effectuée. Pour ceci, l'une des procédures d'authentification possible consiste à envoyer à l'unité d'utilisateur que l'on veut authentifier, un message contenant un nombre, par exemple un nombre aléatoire généré par le centre de gestion. Ce message est ensuite reçu par l'unité d'utilisateur, puis chiffré avec une clé contenue dans cette unité, dans le décodeur ou dans le module de sécurité. Toute autre forme de modification mathématique utilisant une variable unique par unité d'utilisateur peut être utilisée. Ce nombre aléatoire chiffré est renvoyé au centre de gestion. Le centre de gestion déchiffre le message reçu au moyen d'une clé mémorisée dans le centre de gestion et correspondant à l'unité d'utilisateur recherchée. La valeur déchiffrée est comparée au nombre aléatoire initial. Si ceux-ci sont égaux, l'unité d'utilisateur est considérée comme authentique. Sinon, elle est considérée comme frauduleuse et les messages destinés à cette unité ne lui sont pas envoyés. Ces messages peuvent en particulier être des droits ou des clés permettant l'accès au contenu chiffré.

Les clés utilisées pour l'authentification peuvent bien entendu être des clés symétriques ou asymétriques.

Il est à noter que cette phase de détection peut se faire sans gêner l'accès aux données par l'utilisateur, c'est-à-dire que celui-ci pourra continuer à utiliser le service et par exemple visualiser des données pendant la détection.

Lorsque l'adresse logique d'une unité d'utilisateur a changé, celle-ci envoie une requête au centre de gestion, en indiquant la nouvelle adresse logique ainsi que des données d'identification liées à l'unité d'utilisateur. Cette nouvelle adresse pourra être mémorisée dans le centre de gestion après authentification.

Pendant toutes ces opérations, l'utilisateur n'est pas empêché d'employer le service. Cette mise à jour se fait donc de manière totalement transparente pour lui.

### BREVE DESCRIPTION DES FIGURES

La présente invention et ses avantages seront mieux compris en référence à un mode de réalisation préféré de l'invention et aux dessins annexés dans lesquels :

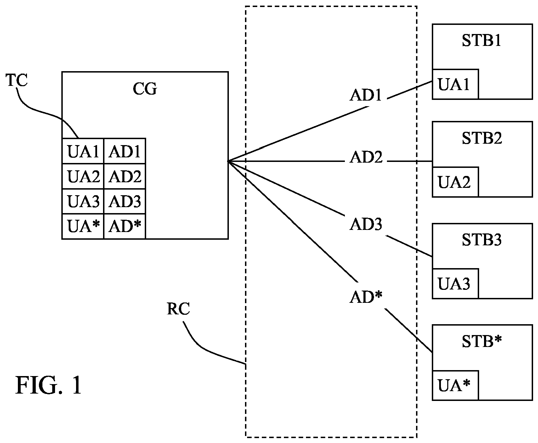

- la figure 1 représente l'ensemble du système auquel est appliqué le procédé de l'invention; et
- la figure 2 représente les étapes du procédé de l'invention.

### MANIÈRES DE RÉALISER L'INVENTION

En référence aux figures, le procédé de l'invention se déroule dans un environnement dans lequel un contenu ou des données telles que notamment des données accès conditionnel sont émises à destination d'unités d'utilisateurs STB. Ces données peuvent être notamment un contenu dans le domaine de la télévision à péage ou des données associées à des services. Les unités d'utilisateur peuvent être un décodeur ou un ordinateur par exemple, contenant un module de sécurité. Les données sont émises par un fournisseur de données et sont diffusées par un centre de diffusion à destination d'une grande partie ou de toutes les unités d'utilisateur. Les droits d'accès sont au contraire distribués sous forme point à point uniquement aux utilisateurs autorisés. Ces droits d'accès sont traités par un centre de gestion CG. Le centre de diffusion et le centre de gestion peuvent être deux entités distinctes ou au contraire une même entité. Les données sont transmises aux unités d'utilisateur par le biais d'une ligne dans un réseau de communication RC telle que par exemple le réseau Internet. A cette ligne correspond une adresse physique de communication. De façon plus détaillée, l'adresse physique de communication peut être formée d'une chaîne d'adresses physiques et de ports de communication correspondant à des adresses physiques de dispositifs utilisés entre le centre de gestion et une unité d'utilisateur spécifique.

Les unités d'utilisateur STB gérées par un même centre de gestion CG font partie d'un groupe d'unités d'utilisateur. Chaque unité a un numéro unique d'identification UA qui est généralement mémorisé dans un module de sécurité associé à un décodeur, le décodeur et le module de sécurité formant cette unité d'utilisateur. Il est à noter que ce numéro d'identification UA est dans un format propriétaire du centre de gestion. Cela signifie qu'il n'a aucune signification au niveau du réseau de communication entre le centre de gestion et les décodeurs.

Chaque unité d'utilisateur est associée à une adresse logique AD du réseau de communication. Cette adresse logique est celle qui est utilisée par le centre de gestion pour transmettre un message à une unité d'utilisateur spécifique. Cette adresse logique est formée d'une adresse IP statique, d'une adresse MAC ou d'une chaîne de caractères alphanumériques qui peuvent par exemple constituer un nom. Une adresse logique pourrait être par exemple "decodeur.nagra.com". L'adresse logique est généralement mémorisée dans le décodeur.

La liaison entre l'adresse physique variable et l'adresse logique fixe est établie de façon connue, par un serveur connu sous l'acronyme DHCP serveur (Dynamic Host Configuration Protocol). D'autre part, le serveur DNS maintient une liste de correspondance entre l'adresse définie par le serveur DHCP et l'adresse logique de l'unité d'utilisateur.

Le centre de gestion contient une table de correspondance TC entre l'adresse logique AD d'un décodeur dans le réseau de communication et le numéro unique d'identification UA du module de sécurité correspondant. Cette table de correspondance peut en outre contenir une clé qui est associée à chaque unité d'utilisateur.

En règle générale, l'adresse physique de communication entre une unité d'utilisateur et le centre de gestion change fréquemment, par exemple à chaque enclenchement de l'unité d'utilisateur. Par contre, il est possible que le module de sécurité soit associé à un autre décodeur. Ainsi un message arrivant à une unité d'utilisateur n'est pas correctement adressé car le module de sécurité (l'adresse UA) n'est plus le même et le message ne sera pas reçu pour le module de sécurité souhaité.

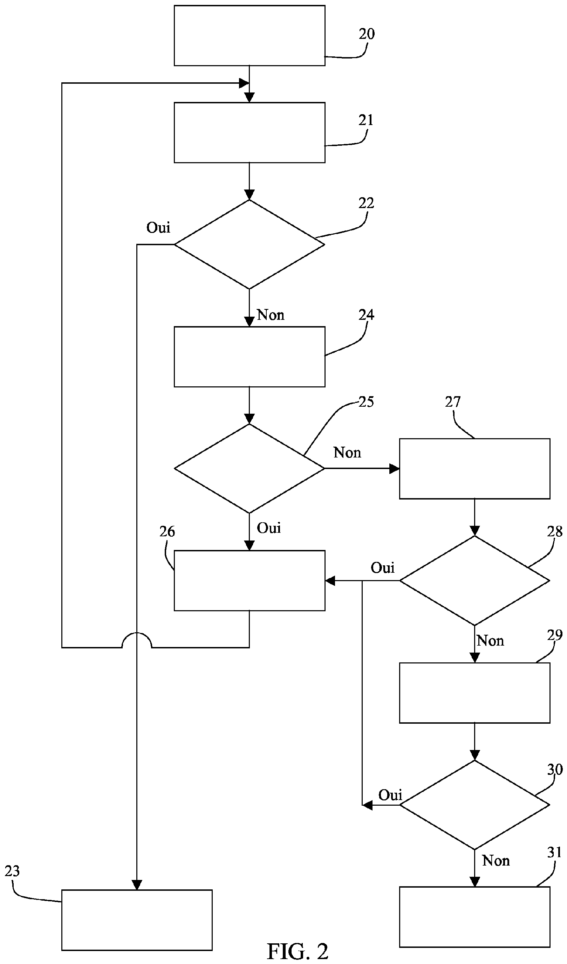

Dans le procédé de l'invention, lorsqu'un message doit être envoyé à une l'unité d'utilisateur spécifique STB*, le centre de gestion CG cherche dans la table de correspondance TC, quelle est l'adresse logique de communication AD* du réseau de communication correspondant au numéro unique d'identification UA* de l'unité d'utilisateur spécifique STB*. Ceci est illustré par l'étape 20 sur la figure 2. Dans le cas où l'adresse logique n'est pas une adresse réelle (IP, MAC), le centre de gestion va collaborer avec des dispositifs de routage intermédiaires entre le centre de gestion et l'unité d'utilisateur concernée pour déterminer de façon conventionnelle, l'adresse physique à utiliser pour envoyer le message à l'adresse logique correspondant à cette unité d'utilisateur, lors de l'étape 21. Cette étape peut par exemple se faire au moyen d'un serveur du type DNS (Domain name system) qui définit une hiérarchie dans les noms utilisés. Cette hiérarchie permet d'une part d'assurer l'unicité des adresses logiques et d'autre part de trouver l'adresse physique correspondant à cette adresse logique. Dans l'étape suivante 22, le centre de gestion vérifie s'il a obtenu un message de retour ou quittance de la part de l'unité d'utilisateur concernée, indiquant que la réception du message est bonne. S'il reçoit cette quittance, les données de la table sont conservées telles quelles pour ce qui concerne l'unité d'utilisateur spécifique. Ceci est représenté par l'étape 23 sur la figure 2. Au contraire, en cas de non-réception d'une quittance, la table doit être mise à jour. La non-réception d'une quittance peut être signalée par un "message de non-délivrance" indiquant que le message initial n'a pas pu être délivré ou au contraire par l'absence de réception d'une quittance après un certain temps.

Pour la mise à jour de la table TC lorsque le message n'a pas pu être délivré, le centre de gestion émet une requête à destination d'un ensemble d'unités d'utilisateur ou de la totalité des unités d'utilisateur gérées par ce centre de gestion. Dans le mode de réalisation illustré, la requête est envoyée, lors de l'étape portant la référence 24, à un premier ensemble d'unités d'utilisateur. Cette requête contient au moins un identifiant de l'unité d'utilisateur spécifique recherchée ainsi qu'une commande demandant à l'unité d'utilisateur de renvoyer un message au centre de gestion. L'identifiant peut être en particulier le numéro unique d'identification UA*.

Lors d'une étape 25, le centre de gestion vérifie s'il a reçu un message de retour de la part de l'unité d'utilisateur spécifique STB*. Si tel est le cas, il détermine l'adresse logique AD* dans le réseau de communication qui a été utilisée pour envoyer le message de retour.

Avant de mémoriser la nouvelle adresse logique, une procédure d'authentification est générée, de façon à s'assurer que la nouvelle adresse corresponde bien à celle de l'unité d'utilisateur recherchée et pas à une autre unité d'utilisateur ayant usurpé une adresse. Comme indiqué précédemment, une procédure d'authentification possible consiste à envoyer à l'unité d'utilisateur que l'on veut authentifier, un nombre aléatoire généré par le centre de gestion. Ce nombre est ensuite chiffré avec une clé contenue dans l'unité d'utilisateur. Ce nombre aléatoire chiffré est renvoyé au centre de gestion dans lequel il est déchiffré au moyen d'une clé mémorisée dans le centre de gestion et correspondant à l'unité d'utilisateur recherchée. La valeur déchiffrée est comparée au nombre aléatoire initial. Si ceux-ci sont égaux, l'unité d'utilisateur est considérée comme authentique.

D'une manière générale, toute procédure d'authentification d'une unité d'utilisateur peut être employée. Parmi les procédures possibles, il est possible de déterminer une signature d'une unité au moyen d'une fonction à sens unique tel qu'un hachage ou d'autres opérations mathématiques adéquates.

L'adresse logique authentifiée est mémorisée dans la table de correspondance du centre de gestion, en regard du numéro unique d'identification UA* de l'unité d'utilisateur spécifique. Ceci correspond à l'étape 26 de la figure 2. Des messages peuvent ensuite être envoyés à l'unité d'utilisateur spécifique STB* en utilisant l'adresse logique spécifique AD*, conformément à l'étape 21 mentionnée précédemment. Les tables d'adresses contenues dans les serveurs DNS concernés sont également mises à jour.

Si, lors de l'étape précédente 25, le centre de gestion détermine qu'il n'a pas reçu de message de retour, il envoie une requête à un autre ensemble d'unités d'utilisateur. Ceci correspond à une étape portant la référence 27. Le centre de gestion vérifie ensuite, lors d'une étape 28, s'il a reçu un message de retour et met à jour la table de correspondance, lors de l'étape suivante 26 si un message a été reçu. Si aucun message n'a été reçu, le centre de gestion envoie un message à toutes les unités d'utilisateur dont il a la gestion. Ceci correspond à une étape 29. Il vérifie ensuite, lors d'une étape 30 s'il a reçu un message de retour et met à jour la table de correspondance si tel est le cas.

Si au contraire aucun message n'est reçu en retour, plusieurs solutions, symbolisées par la référence 31, sont envisageables. L'une d'elle consiste à relancer la procédure de mise à jour après avoir attendu un certain temps. Une autre consiste à ne plus envoyer de messages à l'unité d'utilisateur considérée et à mémoriser une indication dans la table, selon laquelle cette unité d'utilisateur n'est pas disponible. Dans ce cas, l'abonné qui possède cette unité d'utilisateur pourra demander la réactivation par exemple en téléphonant au centre de gestion.

Le procédé de l'invention a été décrit selon un mode de réalisation particulier dans lequel la requête est tout d'abord envoyée à un sous-ensemble d'unités d'utilisateur, puis, si l'unité spécifique n'a pas été trouvée dans ce sous-ensemble, à un autre sous-ensemble d'unités d'utilisateur et finalement à toutes les unités d'utilisateur. Il est clair que le nombre de sous-ensembles peut être plus grand ou plus petit. Il est également possible d'envoyer la requête à toutes les unités d'utilisateur dès le premier envoi.

Les sous-ensembles peuvent être formés sur la base de "sous-réseaux" de communication, chaque sous-réseau étant associé à un équipement de communication particulier tel qu'un routeur par exemple. L'ensemble de ces sous-réseaux forme le réseau de communication entre le centre de gestion et le groupe d'unités d'utilisateurs.

Il est aussi possible d'optimiser la recherche en choisissant comme membres du premier sous-ensemble auquel la requête est envoyée, un certain nombre d'unités d'utilisateur parmi lesquelles les chances de trouver l'unité d'utilisateur spécifique recherchée sont les plus grandes. Ceci peut être déterminé par exemple à partir de la dernière adresse mémorisée par cette unité d'utilisateur et en utilisant la hiérarchie définie dans un serveur DNS.

## Revendications

1. Procédé de mise à jour d'une table de correspondance (TC) entre une adresse logique (AD) associée à une unité d'utilisateur (STB*) dans un réseau de communication et un numéro unique d'identification (UA) associé à ladite unité d'utilisateur, cette unité d'utilisateur appartenant à un groupe d'unités d'utilisateur gérés par un centre de gestion (CG), dans lequel ladite unité d'utilisateur comprend des moyens de traitement de données, ces moyens de traitement de données étant associés à ladite adresse logique, et dans laquelle ladite unité d'utilisateur comporte en outre un module de sécurité associé audit numéro unique d'identification, ledit procédé comprenant une étape d'échange de messages entre ledit centre de gestion et au moins ladite unité d'utilisateur spécifique (STB*) dudit groupe par l'intermédiaire dudit réseau de communication, ces messages étant acheminés à l'unité d'utilisateur spécifique (STB*) en utilisant l'adresse logique (AD*) de ladite unité d'utilisateur dans ledit réseau, **caractérisé en ce qu'**il comprend les étapes suivantes :
- recherche dans ladite table de correspondance (TC), de l'adresse logique (AD*) de l'unité d'utilisateur dans ledit réseau de communication en utilisant le numéro unique d'identification (UA*) correspondant à l'unité d'utilisateur (STB*);
- envoi de messages à l'unité d'utilisateur (STB*) ayant ledit numéro unique d'identification (UA*) en utilisant l'adresse logique (AD*) correspondante dudit réseau de communication;
- attente d'un message de retour de ladite unité d'utilisateur spécifique (STB*) ayant le numéro unique d'identification concerné (UA*);
- au cas où un message de retour n'est pas reçu, envoi d'une requête par le centre de gestion à tout ou partie des unités d'utilisateur (STB) faisant partie dudit groupe, ladite requête contenant au moins ledit numéro unique d'identification (UA*) de ladite unité d'utilisateur pour laquelle la table de correspondance doit être mise à jour, et une commande demandant l'envoi d'un message de retour au centre de gestion;
- détection d'un message de retour d'une unité d'utilisateur (STB*) dont le numéro d'identification unique (UA*) correspond audit identifiant contenu dans la requête;
- détermination de l'adresse logique (AD*) dans ledit réseau, utilisée par l'unité d'utilisateur (STB*) ayant émis le message de retour;
- vérification de l'adresse logique (AD) par établissement d'une communication entre le centre de gestion et l'unité d'utilisateur (STB*) et authentification de l'unité d'utilisateur spécifique par le centre de gestion,
- mémorisation dans la table de correspondance (TC) du centre de gestion, de ladite adresse logique (AD*) de l'unité d'utilisateur dans ledit réseau, en liaison avec ledit numéro d'identification unique (UA*) de l'unité d'utilisateur (STB*) ayant émis le message de retour.

2. Procédé de mise à jour d'une table de correspondance selon la revendication 1, **caractérisé en ce que** l'authentification d'une unité d'utilisateur spécifique comporte les étapes :
- d'envoi d'un message contenant une valeur générée par le centre de gestion;
- de réception dudit message par une unité d'utilisateur;
- d'extraction de ladite valeur et de transformation de cette valeur au moyen d'une clé contenue dans ladite unité d'utilisateur;
- de renvoi d'un message contenant ladite valeur transformée au centre de gestion;
- de réception dudit message par le centre de gestion;
- de comparaison de ladite valeur retournée avec la valeur attendue par le centre de gestion.

3. Procédé de mise à jour d'une table de correspondance selon la revendication 1, **caractérisé en ce que** l'identifiant de ladite unité d'utilisateur spécifique (STB*) est ledit numéro d'identification unique (UA*) de cette unité d'utilisateur.

4. Procédé de mise à jour d'une table de correspondance selon la revendication 3, **caractérisé en ce que** l'unité d'utilisateur comporte un module de sécurité et **en ce que** ledit numéro d'identification unique (UA*) est mémorisé dans ce module de sécurité.

5. Procédé de mise à jour d'une table de correspondance selon la revendication 1, **caractérisé en ce que** l'on envoie la requête à un sous-ensemble d'unités d'utilisateurs, ce sous-ensemble étant lié à un sous-réseau de communication formant une partie du réseau de communication entre le centre de gestion et le groupe d'unités d'utilisateurs.

6. Procédé de mise à jour d'une table de correspondance selon la revendication 5, **caractérisé en ce que** le sous-ensemble d'unités d'utilisateur est choisi en fonction de critères de probabilité de telle sorte que la probabilité que l'unité d'utilisateur spécifique (STB*) recherchée appartienne à ce sous-ensemble est plus grande que la probabilité qu'elle appartienne à un autre sous-ensemble contenant le même nombre d'unités d'utilisateur.

7. Procédé de mise à jour d'une table de correspondance selon la revendication 1, **caractérisé en ce que** des données chiffrées sont transmises aux unités d'utilisateur en mode diffusion et les messages sont transmis en mode point à point, ces messages contenant des moyens pour accéder audites données.

8. Procédé de mise à jour d'une table de correspondance selon l'une quelconque des revendications précédentes, **caractérisé en ce que** l'adresse logique (AD) est formée d'un code alphanumérique.

9. Procédé de mise à jour d'une table de correspondance selon l'une quelconque des revendications précédentes, **caractérisé en ce que** l'adresse logique (AD) est mémorisée dans le décodeur (STB) de l'unité d'utilisateur

10. Procédé de mise à jour d'une table de correspondance selon l'une quelconque des revendications précédentes, **caractérisé en ce que** le numéro d'identification (UA) est mémorisé dans le module de sécurité de l'unité d'utilisateur.

## Patentansprüche

1. Verfahren zur Aktualisierung einer Entsprechungstabelle (TC) zwischen einer logischen Adresse (AD), die mit einer Benutzereinheit (STB*) in einem Kommunikationsnetz verbunden ist, und einer eindeutigen Erkennungszahl (UA), die mit besagter Benutzereinheit verbunden ist, wobei diese Benutzereinheit einer Gruppe von Benutzereinheiten angehört, die von einem Verwaltungszentrum (CG) verwaltet werden, wobei die Benutzereinheit Mittel zur Verarbeitung von Daten umfasst, wobei diese Mittel zur Verarbeitung von Daten mit besagter logischer Adresse verbunden sind, und wobei die Benutzereinheit außerdem ein Sicherheitsmodul umfasst, das mit der eindeutigen Erkennungszahl verbunden ist, wobei das Verfahren eine Austauschphase von Nachrichten zwischen dem Verwaltungszentrum und mindestens der spezifischen Benutzereinheit (STB*) der genannten Gruppe durch den Vermittler des genannten Kommunikationsnetzes umfasst, wobei diese Nachrichten der spezifischen Benutzereinheit (STB*) unter Benutzung der logischen Adresse (AD*) der Benutzereinheit in dem Netz zugeführt werden, **gekennzeichnet dadurch, dass** es die folgenden Schritte umfasst:
- Suche in der Entsprechungstabelle (TC) nach der logischen Adresse (AD*) der Benutzereinheit in dem Kommunikationsnetz unter Benutzung der eindeutigen Erkennungszahl (UA*), die der Benutzereinheit (STB*) entspricht;
- Sendung von Nachrichten an die Benutzereinheit (STB*) mit besagter eindeutigen Erkennungszahl (UA*) unter Benutzung der entsprechenden logischen Adresse (AD*) des genannten Kommunikationsnetzes;
- Erwartung einer Rückmeldung von besagter spezifischer Benutzereinheit (STB*), die die eindeutige Erkennungszahl (UA*) hat;
- falls keine Rückmeldung empfangen wird, Sendung einer Anfrage durch das Verwaltungszentrum an alle oder einen Teil der Benutzereinheiten (STB), die der genannten Gruppe angehören, wobei die Anfrage mindestens die eindeutige Erkennungszahl (UA*) der Benutzereinheit enthält, für die die Entsprechungstabelle aktualisiert werden soll, und einen Befehl, der die Sendung einer Rückmeldung an das Verwaltungszentrum anfordert;
- Ermittlung einer Rückmeldung von einer Benutzereinheit (STB*), deren Identifikationsnummer (UA*) der in der Anfrage enthaltenen Kennung entspricht;
- Ermittlung der logischen Adresse (AD*) in besagtem Netz, das von der Benutzereinheit (STB) benutzt wird, die die Rückmeldung herausgegeben hat;
- Prüfung der logischen Adresse (AD) durch Erstellung einer Kommunikation zwischen dem Verwaltungszentrum und der Benutzereinheit (STB*) und Authentifizierung der spezifischen Benutzereinheit durch das Verwaltungszentrum,
- Speicherung, in der Entsprechungstabelle (TC) des Verwaltungszentrums, der logischen Adresse (AD*) der Benutzereinheit in dem Netz, in Verbindung mit der Identifikationsnummer (UA*) der Benutzereinheit (STB*), die die Rückmeldung herausgegeben hat.

2. Verfahren zur Aktualisierung einer Entsprechungstabelle nach Anspruch 1, **gekennzeichnet dadurch, dass** die Authentifizierung einer spezifischen Benutzereinheit die folgenden Phasen umfasst:
- Sendung einer Nachricht, die einen vom Verwaltungszentrum erzeugten Wert enthält;
- Empfang der genannten Nachricht durch eine Benutzereinheit;
- Extraktion des Wertes und Umwandlung dieses Wertes mittels eines Schlüssels in der Benutzereinheit;
- Rücksendung einer Nachricht, die besagten umgewandelten Wert enthält, an das Verwaltungszentrum;
- Empfang der genannten Nachricht durch das Verwaltungszentrum;
- Vergleich des zurückgesandten Wertes mit dem erwarteten Wert durch das Verwaltungszentrum.

3. Verfahren zur Aktualisierung einer Entsprechungstabelle nach Anspruch 1, **gekennzeichnet dadurch, dass** die Kennung besagter spezifischer Benutzereinheit (STB*) die eindeutige Identifikationsnummer (UA*) dieser Benutzereinheit ist.

4. Verfahren zur Aktualisierung einer Entsprechungstabelle nach Anspruch 3, **gekennzeichnet dadurch, dass** die Benutzereinheit ein Sicherheitsmodul umfasst, sowie dadurch, dass die Identifikationsnummer (UA*) in diesem Sicherheitsmodul gespeichert wird.

5. Verfahren zur Aktualisierung einer Entsprechungstabelle nach Anspruch 1, **gekennzeichnet dadurch, dass** man die Anfrage an eine Untereinheit von Benutzereinheiten schickt, wobei diese Untereinheit mit einem Kommunikationssubnetz verbunden ist, das ein Teil des Kommunikationsnetzes zwischen dem Verwaltungszentrum und der Gruppe von Benutzereinheiten bildet.

6. Verfahren zur Aktualisierung einer Entsprechungstabelle nach Anspruch 5, **gekennzeichnet dadurch, dass** die Untereinheit von Benutzereinheiten nach Wahrscheinlichkeitskriterien ausgewählt wird, so dass die Wahrscheinlichkeit, dass die gesuchte spezifische Benutzereinheit (STB*) dieser Untereinheit angehört, größer ist als die Wahrscheinlichkeit, dass sie einer anderen Untereinheit angehört, die dieselbe Zahl von Benutzereinheiten enthält.

7. Verfahren zur Aktualisierung einer Entsprechungstabelle nach Anspruch 1, **gekennzeichnet dadurch, dass** verschlüsselte Daten im Modus Rundsenden an die Benutzereinheiten übertragen werden und die Nachrichten im Punkt-zu-Punkt-Modus übertragen werden, wobei diese Nachrichten Mittel enthalten, um auf die genannten Daten zuzugreifen.

8. Verfahren zur Aktualisierung einer Entsprechungstabelle nach einem beliebigen der vorherigen Ansprüche, **gekennzeichnet dadurch, dass** die logische Adresse (AD) von einem alphanumerischen Code gebildet wird.

9. Verfahren zur Aktualisierung von einer Entsprechungstabelle nach einem beliebigen der vorherigen Ansprüche, **gekennzeichnet dadurch, dass** die logische Adresse (AD) in dem Decoder (STB) der Benutzereinheit gespeichert wird.

10. Verfahren zur Aktualisierung einer Entsprechungstabelle nach einem beliebigen der vorherigen Ansprüche, **gekennzeichnet dadurch, dass** die Identifizierungsnummer (UA) in dem Sicherheitsmodul der Benutzereinheit gespeichert wird.

## Claims

1. Method for updating a table of correspondence (TC) between a logical address (AD) associated with a user unit (STB*) in a communication network and a unique identification number (UA) associated with said user unit, this user unit belonging to a group of user units managed by a management centre (CG), wherein said user unit comprises means for processing data, said data processing means being associated with said logical address, and wherein said user unit further comprises a security module associated with said unique identification number, said method comprising a step of exchanging messages between said management centre and at least said specific user unit (STB*) of said group by means of said communication network, these messages being forwarded to the specific user unit (STB*) using the logical address (AD*) of said user unit in said network, **characterized in that** it comprises the following steps:
- search in said table of correspondence (TC) for the logical address (AD*) of the user unit in said communication network by using the unique identification number (UA*) corresponding to the specific user unit (STB*);
- sending messages to the user unit (STB*) having said unique identification number (UA*) by using the logical address (AD*) corresponding to said communication network;
- waiting for a return message from said specific user unit (STB*) having the concerned unique identification number (UA*);
- in case a return message is not received, sending a request by the management centre to all or a part of the user units (STB) belonging to said group, said request containing at least said unique identification number (UA*) of said specific user unit for which the table of correspondence must be updated, and a command requesting sending a return message to the management centre;
- detection of a return message from a user unit (STB*) whose unique identification number (UA*) corresponds to said identifier contained in the request;
- determining the logical address (AD*) in said network, used by the user unit (STB*) having emitted the return message;
- verification of the logical address (AD) by establishing a communication between the management centre and the user unit (STB*) and authentication of the specific user unit by the management centre,
- storing in the table of correspondence (TC) of the management centre said logical address (AD*) of the user unit in said network, in connection with said unique identification number (UA*) of the user unit (STB*) having emitted the return messages.

2. Method for updating a table of correspondence according to claim 1, **characterized in that** the authentication of a specific user unit comprises the steps of:
- sending a message containing a value generated by the management centre;
- receiving said message by a user unit;
- extracting said value and transforming this value by means of a key contained in said user unit;
- returning a message containing said transformed value to the management centre;
- receiving said message by the management centre;
- comparing said returned value with the value expected by the management centre.

3. Method for updating a table of correspondence according to claim 1, **characterized in that** the identifier of said specific user unit (STB*) is said unique identification number (UA*) of this user unit.

4. Method for updating a table of correspondence according to claim 3, **characterized in that** the user unit comprises a security module and **in that** said unique identification number (UA*) is stored in this security module.

5. Method for updating a table of correspondence according to claim 1, **characterized in that** the request is sent to a subset of user units, this subset being connected to a communication sub-network forming part of the communication network between the management centre and the group of user units.

6. Method for updating a table of correspondence according to claim 5, **characterized in that** the subset of user units is selected according to probability criteria in such a way that the probability that the specific user unit (STB*) that is the object of the search belongs to this subset is greater than the probability that it belongs to another subset containing the same number of user units.

7. Method for updating a table of correspondence according to claim 1, **characterized in that** encrypted data is transmitted to user units in broadcast mode and the messages are transmitted in point-to-point mode, these messages containing means to access said data.

8. Method for updating a table of correspondence according to any of the previous claims, **characterized in that** the logical address (AD) is made up of an alphanumeric code.

9. Method for updating a table of correspondence according to any of the previous claims, **characterized in that** the logical address (AD) is stored in the decoder (STB) of the user unit.

10. Method for updating a table of correspondence according to any of the previous claims, **characterized in that** the identification number (UA) is stored in the security module of the user unit.
